# EUROPEAN PATENT SPECIFICATION

(11) **EP 2 816 406 B1**
(45) Date of publication and mention of the grant of the patent: **28.02.2018**
(21) Application number: 14173316.2
(22) Date of filing: 20.06.2014
(51) Int. Cl.: G03B 21/16, G03B 21/28, H04N 9/31

(54) **IMAGE PROJECTOR COMPRISING A COOLING SYSTEM**
BILDPROJEKTOR MIT KÜHLVORRICHTUNG
PROJECTEUR D'IMAGE COMPRENANT UN SYSTÈME DE REFROIDISSEMENT

(30) Priority: 21.06.2013 JP 2013130736
(43) Date of publication of application: 24.12.2014
(73) Proprietor: Ricoh Company, Ltd., Tokyo 143-8555 (JP)
(72) Inventor: Fujioka, Tetsuya, Tokyo 143-8555 (JP); Ishikawa, Naoyuki, Tokyo 143-8555 (JP); Kanai, Hideo, Tokyo 143-8555 (JP); Mikawa, Akihisa, Tokyo 143-8555 (JP); Yamada, Masamichi, Tokyo 143-8555 (JP); Mikutsu, Yasunari, Tokyo 143-8555 (JP); Tsuchiya, Satoshi, Tokyo 143-8555 (JP)
(74) Representative: J A Kemp

(56) References cited:
- EP-A1- 1 542 460
- EP-A2- 2 590 021
- WO-A1-2012/042613
- US-A1- 2003 164 926

## Description

### BACKGROUND

### Technical Field

The present invention relates to an image projector.

### Background Art

Conventionally, image projectors that include an image forming unit that comprises an image generating device that modulates light based on image data transferred from personal computers etc. and an illuminating unit that illuminates the image generating device with the light from a light source are well-known. For those image projectors, the image forming unit forms images, and those images formed by the image forming unit are formed onto a projection surface using a projection optical unit.

The image projectors include heat generating devices such as the image generating device, the light source, and a power supply etc. An image projector that circulates air through the image generating device, the light source, and the power supply, and to cool them down has been proposed. (e.g., JP-2013-097340-A).

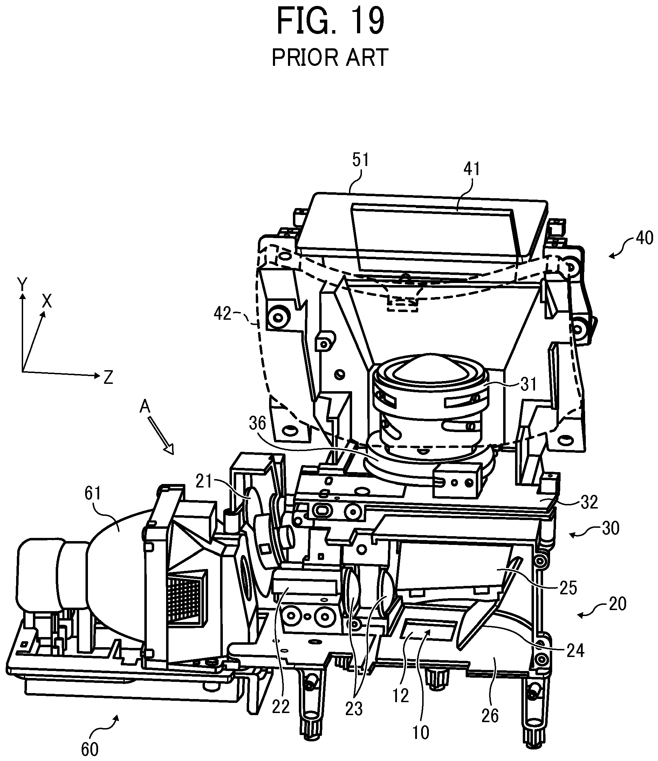

FIG. 19 is a schematic perspective diagram illustrating an internal configuration of the image projector described in JP-2013-097340-A.

As shown in FIG. 19, the image projector described in JP-2013-097340-A includes a light modulator 10 that includes the image generating device 12 and an illuminating unit 20 that illuminates the image generating device as the image forming unit with the light from a light source 60. The illuminating unit 20 includes a color wheel 21, a light tunnel 22, two relay lenses 23, a cylinder mirror 24, and a concave mirror 25, and those units are held in an illumination bracket 26.

In addition, the image projector described in JP-2013-097340-A includes a first optical unit 30 that holds a projection lens unit 31 and a second optical unit 40 that holds a curved mirror 42 and a reflecting mirror 41 etc. The projection lens unit 31 is held in a lens holder 32, and the lens holder 32 is fixed on the upper surface of the illumination bracket 26.

The light modulator 10, the illuminating unit 20, the first optical unit 30, and the second optical unit 40 are placed in the y direction in FIG. 19. In addition, a light source unit 60 that includes a light source 61 is placed in the left side of the illuminating unit 20 in FIG. 19.

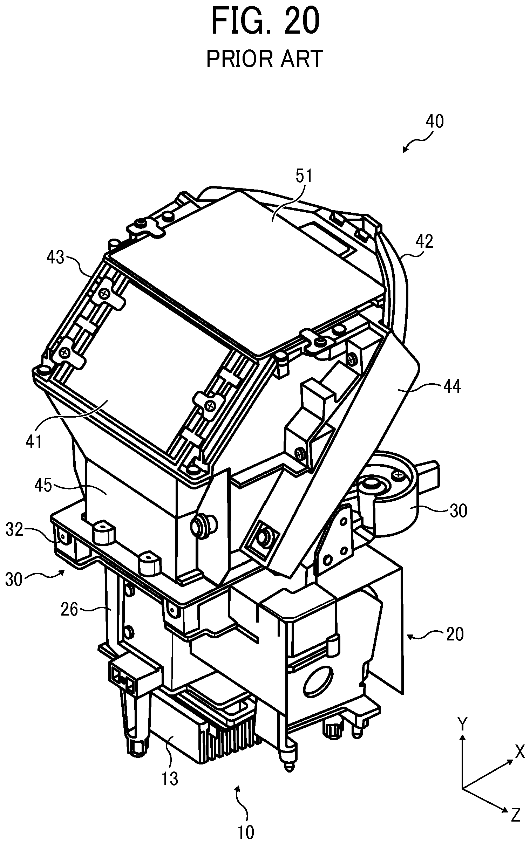

FIG. 20 is a perspective diagram illustrating the light modulator 10, the illuminating unit 20, the first optical unit 30, and the second optical unit 40 in the image projector described in JP-2013-097340-A.

As shown in FIG. 20, the light modulator 10 is fixed on the lower surface of the illumination bracket 26 in the illuminating unit 20, and the light modulator 10 includes a heat sink 13 as a radiating device that radiates heat that the image generating device gives off.

The second optical unit 40 includes a mirror bracket 43 that holds the reflecting mirror 41 and a dustproof glass window 51 that fills an aperture placed on a case (not shown in figures) to project images on the screen. In addition, the second optical unit 40 includes a flexible mirror bracket 44 that hold the curved mirror 42 and a mirror holder 45 that mounts the mirror bracket 43 and the flexible mirror bracket 44. The second optical unit 40 is fixed to the lens holder 32 in the first optical unit 30.

As shown in FIG. 19, the projection lens unit 31 includes a focus gear 36 to focus, and a focus lever 33 shown in FIG. 20 is connected to the focus gear 36 via multiple gears (not shown in figures). With rotation of the focus lever 33, the focus gear 36 is driven and rotated via the multiple gears (not shown in figures) to focus by moving multiple lenses held by the projection lens unit 31 to the y direction. As shown in FIG. 19, there is a gap between the lower end of the curved mirror 42 and the lens holder 32, and the multiple gears (not shown in figures) described above are placed in the gap.

FIG. 21 is an elevational diagram illustrating an airflow in the image projector described in JP-2013-097340-A.

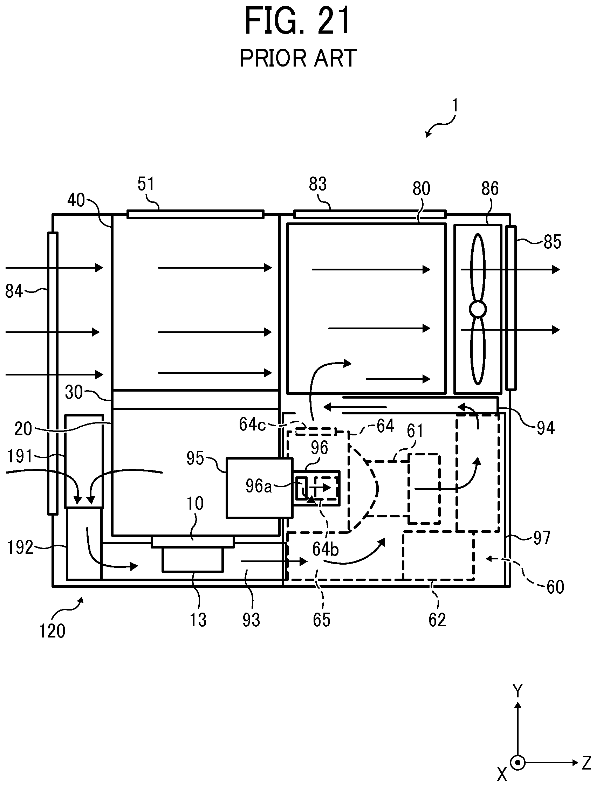

An intake duct 84 opened to take air into the interior of the apparatus in the one side of the image projector (left side in FIG. 21), and an exhaust vent 85 opened to exhaust air in the apparatus in the other side of the image projector (right side in FIG. 21). An exhaust fan 86 is placed in opposition to the exhaust vent 85.

In the lower left side of the main body of the apparatus in FIG. 21, a cooling unit 120 is provided to cool the heat sink 13 and the light source unit 60 etc. The cooling unit 120 includes an intake blower 191, a vertical duct 192, and a horizontal duct 93.

The intake blower 191 is placed so as to face the lower part of the intake duct 84. The intake blower 191 takes outside air from the surface facing the intake duct 84 via the intake duct 84 and takes inside air from the opposed surface in opposition to the surface facing the intake duct 84. The air taken by the intake blower 191 flows to the vertical duct 192 placed below the intake blower 191. The air that flows in the vertical duct 192 moves below and is sent to the horizontal duct 93 connected to the lower part of the vertical duct 192.

The heat sink 13 is placed inside the horizontal duct 93 and cooled by the air that flows inside the horizontal duct 93. The image generating device 12 can be cooled effectively by cooling the heat sink 13 and prevented from being hot.

After moving through the horizontal duct 93, the air flows in the light source unit 60. Subsequently, after cooling the light source unit 60, the air flows through the exhaust duct 94 and exhausted upon a light source exhaust duct 64C placed on a holder 64 that holds the light source 61. After that, the air flows in the space where the power supply 80 is placed in conjunction with the air exhausted from the light source exhaust duct 64.

In addition, the exhaust fan 86 takes outside air through the intake duct 84. The outside air taken by the exhaust fan 86 flows to the backside of the curved mirror 42 in the second optical unit 40 shown in FIG. 20 and the backside of the reflecting mirror 41 etc. Subsequently, the air moves toward a second intake duct 84 alongside of the backside of the curved mirror 42 and the backside of the reflecting mirror 41, and the air flows into the space above the light source unit 60 where the power supply 80 is placed. After being mixed with the high temperature air exhausted from the light source exhaust duct 64C described above, the air is exhausted from the exhaust duct 85.

In the conventional image projector described in JP-2013-097340-A, there is the gap between the bottom of the curved mirror 42 and the lens holder 32 as shown in FIG. 19, and air can go in and out between the interior of the case and the second optical unit. Therefore, it is possible that the outside air taken from the intake duct 84 flows in the second optical unit. Consequently, it is possible that dust included in the outside air is adhered to the reflection surfaces of the curved mirror 42 and the reflecting mirror 41 as optical devices included in the second optical unit 40. If the dust is adhered to the reflection surfaces of the curved mirror and the reflecting mirror, that results in degrading quality of the projection images.

In view of the above, there is a need for an image projector that can prevent such as dust from being adhered to the optical devices in the projection optical unit, while allowing cooling of the image generating device and the light source.

WO 2012/042613 discloses a projector of the type which has a generally horizontal casing and a mirror for directing the projected beam back over the casing toward a screen. An air inlet is provided adjacent the mirror to suck air from the environment into the casing.

### SUMMARY

According to the present invention here is provided an image projector as defined in the appended claims.

With the above-described configuration, an image projector that can prevent such as dust from being adhered to the optical devices in the projection optical unit is provided.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a perspective diagram illustrating an image projector as an embodiment of the present invention and a projection surface.
FIG. 2 is a diagram illustrating light path from the image projector to the projection surface.
FIG. 3 is a schematic perspective diagram illustrating an internal configuration of the image projector.
FIG. 4 is a schematic perspective diagram illustrating a light source unit.
FIG. 5 is a perspective diagram illustrating optical devices included in a lighting unit along with other units.
FIG. 6 is a perspective diagram illustrating the lighting unit, a projection lens unit, and an image forming unit viewed from direction A shown in FIG. 5.
FIG. 7 is a diagram illustrating light path in the lighting unit.
FIG. 8 is a diagram illustrating light path from a first optical unit to the projection surface.
FIG. 9 is a perspective diagram illustrating the projector viewed from a supported surface.
FIG. 10 is a perspective diagram illustrating the first optical unit along with the lighting unit and an optical modulator.
FIG. 11 is a diagram illustrating layout relationship among units in the image projector.
FIG. 12 is a diagram illustrating an example of use of the image projector.
FIG. 13 is a diagram illustrating another example of use of the image projector.
FIG. 14 is a diagram illustrating airflow in the image projector.
FIG. 15 is a perspective diagram illustrating the light modulator, the lighting unit, and an intake blower.
FIG. 16 is a diagram illustrating the image projector that has an exhaust vent on an outer covering opposed to the projection surface.
FIG. 17 is a perspective diagram illustrating the image projector without a second intake duct.
FIG. 18 is a perspective diagram illustrating airflow in the image projector without the second intake duct.
FIG. 19 is a schematic perspective diagram illustrating an internal configuration of a conventional image projector.
FIG. 20 is a perspective diagram illustrating a light modulator 10, a lighting unit 20, a first optical unit 30, and a second optical unit 40 in the conventional image projector.
FIG. 21 is an elevational diagram illustrating airflow in the conventional image projector.

### DETAILED DESCRIPTION

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

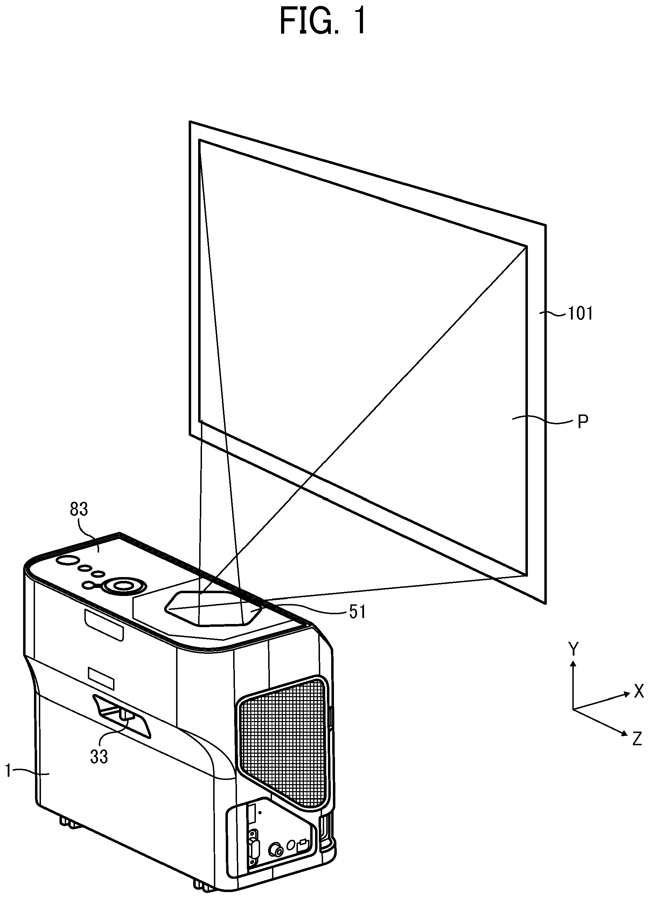

FIG. 1 is a perspective diagram illustrating an image projector 1 in this embodiment and a projection surface 101. In the following description, the normal direction of the projection surface 101 is considered as the x direction, the minor axis direction (vertical direction) of the projection surface 101 is considered as the y direction, and the major axis direction (horizontal direction) of the projection surface 101 is considered as the z direction.

The image projector forms projection images based on image data input from personal computers and video cameras etc. and projects the projection image P onto the projection surface 101 such as screens etc. In particular, liquid crystal projectors are improving brightness due to high-resolution liquid crystal panels and high-efficiency of a light source (lamp) and becoming less expensive recently. In addition, small and lightweight image projectors 1 that adopt a Digital Micro-mirror Device (DMD) as a micro driving mirror device are becoming popular, and the image projectors 1 are widely used not only in workplaces and schools but also in homes. In particular, portability of short throw projectors have been improved, and they have come to be used for especially small or ad hoc meetings with only several attendees. In these projectors, it is requested that not only images can be projected on the larger screen but also that required projection space outside of the image projector be minimized. As described later, the image projector 1 in this embodiment is configured laying out a transparent optical system such as a projection lens etc. parallel to the projection surface 101, reflecting a beam by the reflecting mirror, and enlarging and projecting the beam onto the projection surface 101 with a sculptured surface mirror. In this configuration, it is possible to downsize the upright optical engine unit.

As shown in FIG. 1, a transmitting glass window 51 from which a projection image P is projected is mounted on the upper surface of the image projector 1, and the projection image P projected from the transmitting glass window 51 is projected onto the projection surface 101 such as a screen.

In addition, a control panel 83 for operating the image projector 1 by a user operation is mounted on the upper surface of the image projector 1. A focus lever 33 for focusing is mounted on the side surface of the image projector 1.

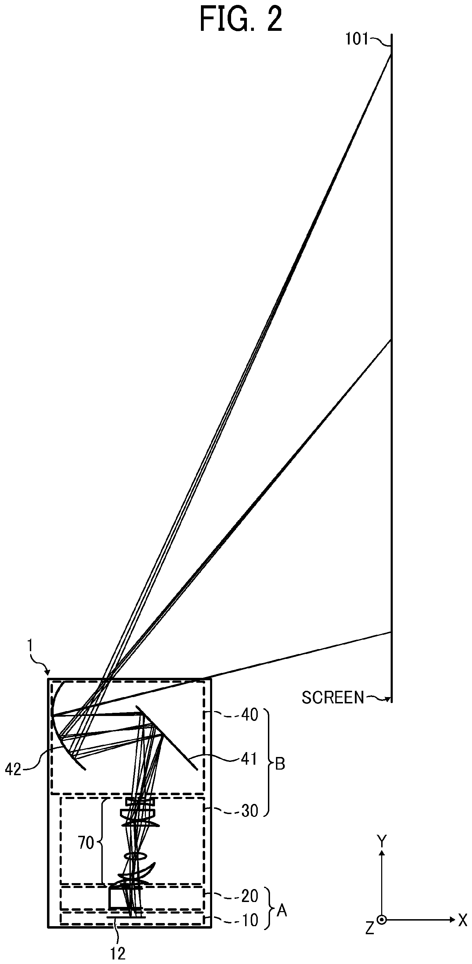

FIG. 2 is a diagram illustrating light path from the image projector 1 to the projection surface 101.

The DMD 12 that generates an image to be projected is illuminated with the light from the light source (not shown in figures) by the lighting unit 20, and the DMD 12 generates the image by modulating the light emitted by the lighting unit 20. The image generated by the DMD 12 is projected onto the projection surface 101 via a first optical system 70 in a first optical unit 30, a reflecting mirror 41 in a second optical unit 40, and a curved mirror 42.

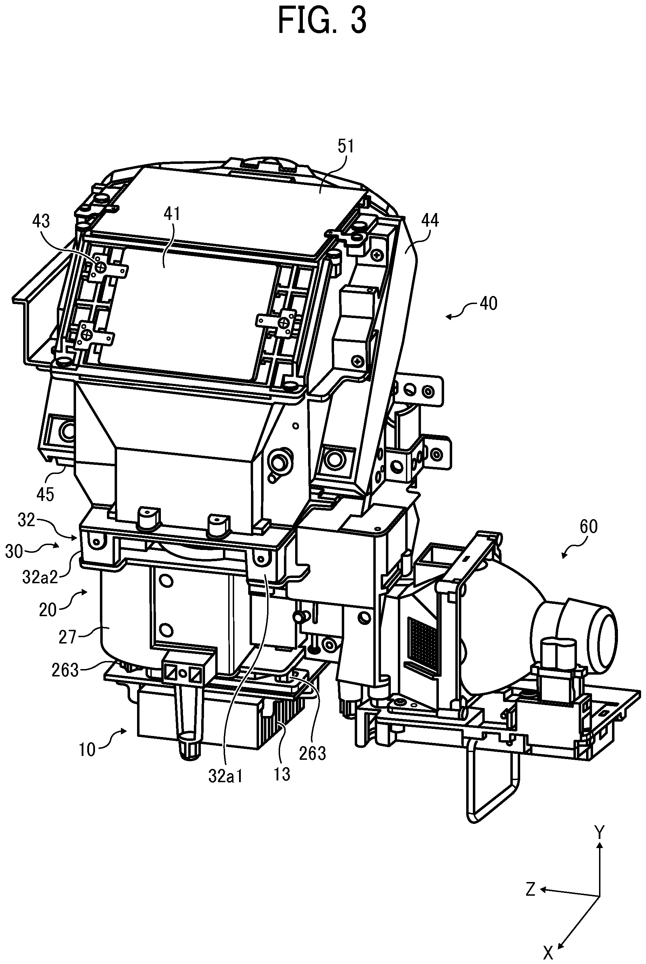

FIG. 3 is a schematic perspective diagram illustrating an internal configuration of the image projector.

As shown in FIG. 3, a light modulator 10, the lighting unit 20, the first optical unit 30, and the second optical unit 40 are placed alongside of the y direction in FIG. 3 among directions parallel to the projection surface and the field of the projection image. In addition, a light source unit 60 is mounted in the right side of the lighting unit 20 in FIG. 3.

Symbols 32a1 and 32a2 in FIG. 3 indicate legs of a lens holder 32 in the first optical unit 30, and symbol 263 indicates a screw part to screw the light modulator 10 onto the lighting unit 20.

Next, configuration of each unit is described below in detail.

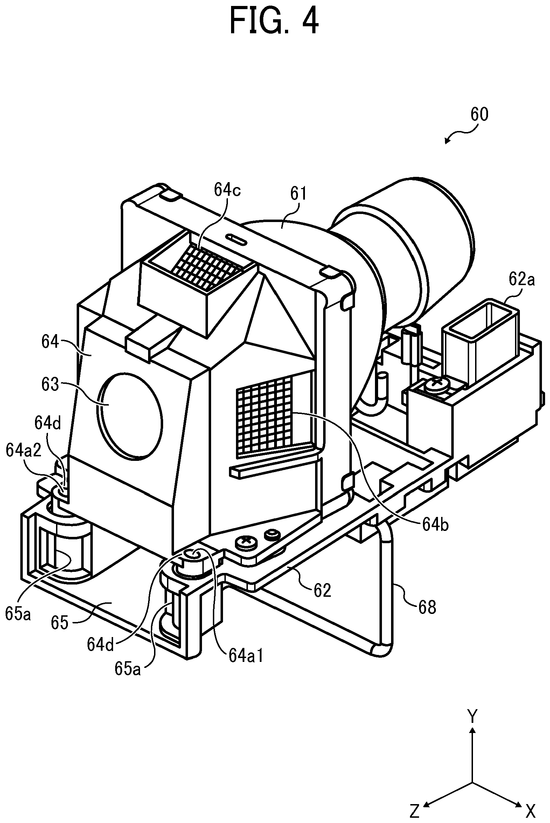

First, the light source unit 60 is described below. FIG. 4 is a schematic perspective diagram illustrating the light source unit 60.

The light source unit 60 includes a light source bracket 62, and a light source 61 such as a halogen lamp, a metal halide lamp, and high-pressure mercury vapor lamp etc. The light source bracket 62 includes a connector 62a to connect to a power connector connected to a power supply (not shown in figures). The connector 62a is placed on one end in the longitudinal direction (z direction) of the light source unit 60.

A holder 64 as a holder that holds a reflector (not shown in figures) etc. is screwed on the upper part of the light source bracket 62 and the light-emitting side of the light source 61. On the surface facing the light source 61 of the holder 64, an emitting window 63 is placed. After being ejected from the light source 61, the light is focused on the emitting window 63 by a reflector held by the holder 64 (not shown in figures) and is emitted from the emitting window 63.

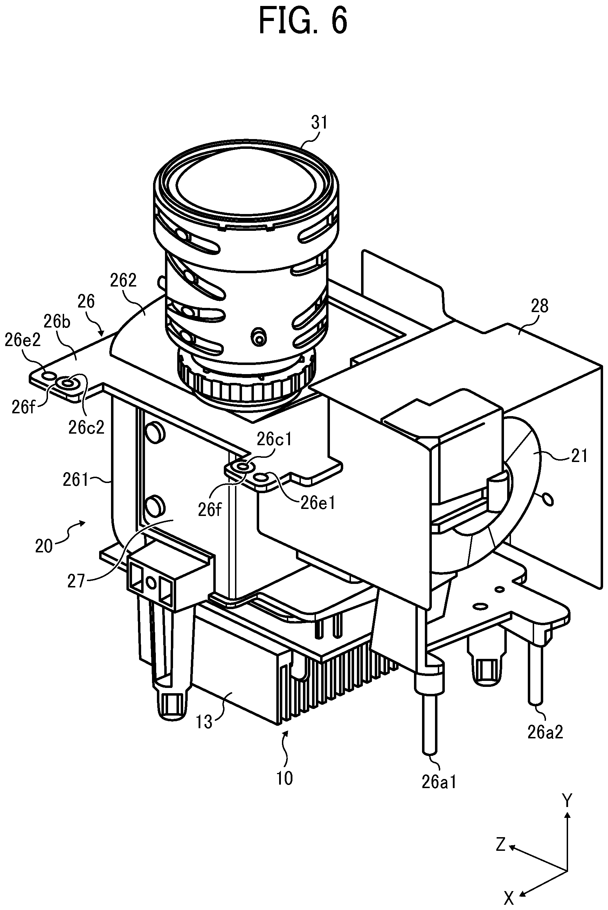

Light source positioning units 64a1 and 64a2 to position the light source unit 60 on a lighting bracket 26 (shown in FIG. 6) in the lighting unit 20 are placed on both ends in the x direction, the upper surface of the holder 64 and the lower surface of the holder 64. The two light source positioning units 64a1 and 64a2 placed on the lower surface of the holder 64 are formed as holes.

On the side surface of the holder 64, a light source intake duct 64b that intakes air to cool the light source 61 is placed. On the upper surface of the holder 64, a light source exhaust vent 64c that exhausts air heated by the light source 61 is placed.

On the light source bracket 62, a handle unit 68 to unmount the light source unit 60 by pinching by a user operation in replacing the light source unit 60 is placed. The handle unit 68 is mounted rotatably in the longitudinal direction (z direction in FIG. 4) of the light source bracket 62 in the almost center of the connector unit 62a and the light source positioning units 64a1 and 64a2. The handle unit 68 can be an appropriate form pinchable by a user operation other than the form shown in figures.

Next, the lighting unit 20 is described below.

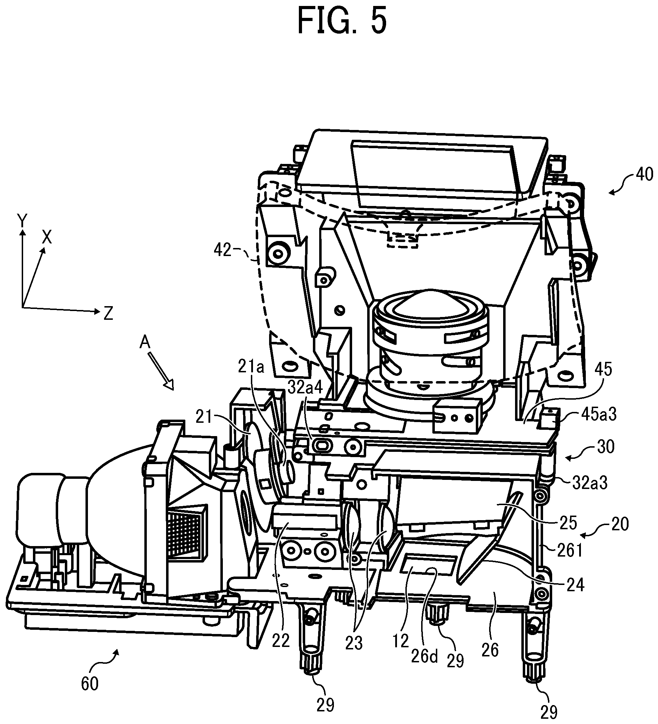

FIG. 5 is a perspective diagram illustrating optical devices included in the lighting unit 20 along with other units.

As shown in FIG. 5, the lighting unit 20 includes a color wheel 21, a light tunnel 22, two relay lenses 23, a cylinder mirror 24, and a concave mirror 25, and those units are held by a lighting bracket 26. The lighting bracket 26 includes a housing part 261 that contains the two relay lenses 23, the cylinder mirror 24, and the concave mirror 25. Among four side surfaces of the housing part 261, only the right surface in FIG. 5 includes a panel, and other three surfaces are open. An off light board 27 (shown in FIG. 6) is mounted on the side opening back in the x direction in FIG. 5. A cover unit (not shown in figures) is mounted on the side opening front in the x direction in FIG. 5. Consequently, the two relay lenses 23, the cylinder mirror 24, and the concave mirror 25 are covered by lighting bracket 26, the off light board 27 (shown in FIG. 6), and the cover unit (not shown in figures).

In addition, there is a through-hole 26d to expose the DMD 12 on the lower surface of the housing unit 261 in the lighting bracket 26.

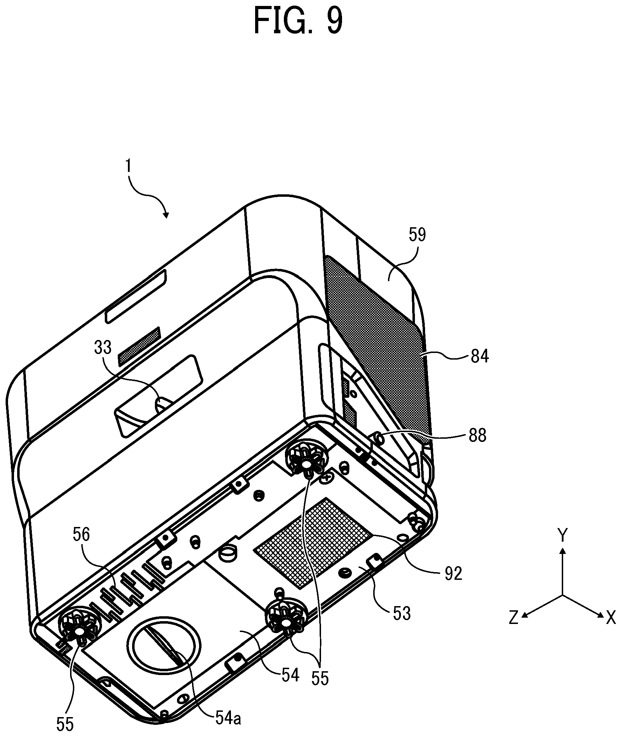

The lighting bracket 26 includes three legs 29. These legs 29 contact a base unit 53 (shown in FIG. 9) in the image projector 1 and support weight of the first optical unit 30 and the second optical unit 40 stacked on and fixed to the lighting bracket 26. In addition, space that outside air flows to the heat sink 13 (shown in FIG. 6) as a radiator to radiate heat of the DMD 12 in the light modulator 10 is formed by laying out the legs 29.

The symbols 32a3 and 32a4 shown in FIG. 5 indicate the leg parts of the lens holder 32 in the first optical unit 30, and the symbol 45a3 shown in FIG. 5 indicates the screwed part 45a3 in the second optical unit 40.

FIG. 6 is a perspective diagram illustrating the lighting unit 20, the projection lens unit 31, and the light modulator 10 viewed from direction A shown in FIG. 5.

There is an upper surface 26b perpendicular to the y direction in FIG. 6 on the upper part of the housing part 261 in the lighting bracket 26. There are through-holes that a screw that screws the first optical unit 30 goes through on four corners of the upper surface 26b. (The through-holes 26c1 and 26c2 are shown in FIG. 6, and other through-holes are not shown in figures.) There are positioning holes 26e1 and 26e2 to position the first optical unit 30 to the lighting unit 20 adjacent to the through-holes 26c1 and 26c2 front in the x direction in FIG. 6. Among two positioning holes front in the x direction in FIG. 6, the positioning hole 26e1 in the side where the color wheel 21 is placed is a main criteria for positioning and has a circle shape. The positioning hole 26e2 facing the color wheel 21 is a sub-criteria for positioning and is a slotted hole extending in the z direction. Surroundings of the through-holes 26c1 and 26c2 are outstanding from the upper surface 26b of the lighting bracket 26 and form a positioning projection 26f for positioning the first optical unit 30 in the y direction. In case of improving precision of positioning in the y direction without forming the positioning projection 26f, it is necessary to keep flatness of the whole part of the upper surface of the lighting bracket 26 high, and that results in pushing up the cost. By contrast, in case of forming the positioning projection 26f, since it is necessary to keep flatness high only part of the positioning projection 26f, it is possible to reduce the cost and improve the procession of positioning in the y direction.

There is a blackout board 262 that the lower part of the projection lens unit 31 fits at the opening part on the upper surface of the lighting bracket 26, and the blackout board 262 prevents light from entering inside the housing part 261 from up above.

The area between the through-holes 26c1 and 26c2 on the upper surface 26b of the lighting bracket 26 is notched not to interfere the second optical unit 40 with screwing onto the first optical unit 30.

There are two projecting light source positioned parts 26a1 and 26a2 that two hole-shaped light source positioning parts 64a1 and 64a2 placed in the light source bracket 62 side on the holder 64 fit in one end where the color wheel 21 in the lighting bracket 26 exists (front side in the z direction in FIG. 6). By fitting the two positioning parts 64a1 and 64a2 of the holder 64 into the two light source positioned parts 26a1 and 26a2 on the lighting bracket 26 in the lighting part 20, the light source unit 60 is positioned and fixed to the lighting unit 20 (shown in FIG. 3).

A lighting cover 28 that covers the color wheel 21 and the light tunnel 22 is fixed to the lighting bracket 26.

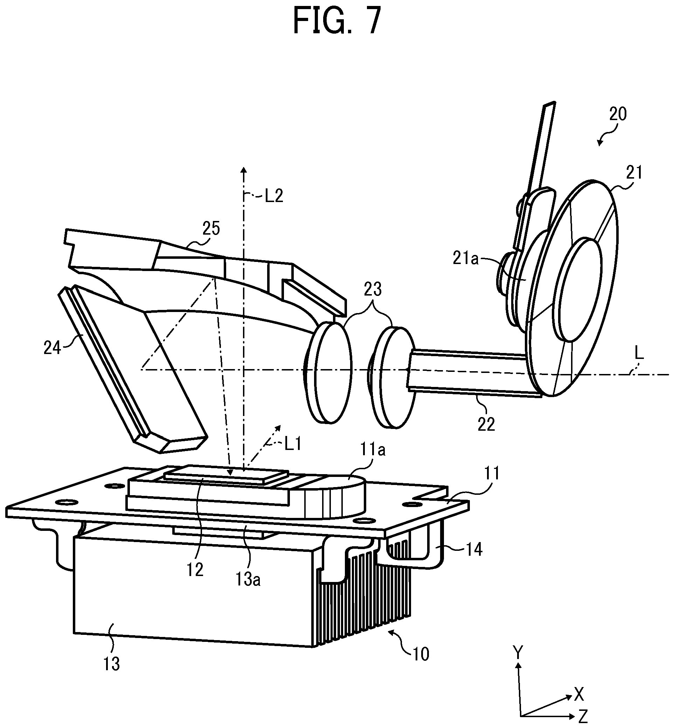

FIG. 7 is a diagram illustrating light path L in the lighting unit 20.

The color wheel 21 is discoid and fixed to the motor axis of the color motor 21a. There are filters R (red), G (green), and B (blue) etc. in the rotating direction on the color wheel 21. Light focused by a reflector (not shown in figures) on the holder 64 of the light source unit 60 goes through the emitting window 63 and arrives at the peripheral area of the color wheel 21. After arriving at the peripheral part of the color wheel 21, the light is split into R light, G light and B light by the rotation of the color wheel 21 time-divisionally.

After being split by the color wheel 21, the light enters into the light tunnel 22. The inner surface of the square tube-shaped light tunnel 22 is mirror-finished. After entering into the light tunnel 22, the light is reflected multiple times on the inner surface of the light tunnel 22, the light becomes uniform surface light source, and the light is emitted toward the relay lenses 23.

After going through the light tunnel 22, the light goes through the two relay lenses 23, the light is reflected by the cylinder mirror 24 and the concave mirror 25, and the light focuses on the image generating surface of the DMD 12 to form an image.

Next, the light modulator 10 is described below.

As shown in FIG. 7, the light modulator 10 includes the DMD board 11 that mounts the DMD 12. The DMD 12 is mounted on a socket 11a placed on the DMD board 11 facing the image generating surface where micro mirrors are placed in a reticular pattern upward. The DMD board 11 includes a driving circuit to drive the DMD mirrors and other circuits. On the backside of the DMD board 11 (the opposite side to the side where the socket 11a is placed), the heat sink 13 that radiates the heat of the DMD 12 as a radiator is fixed. On the DMD board 11, the part where the DMD 12 is mounted is through-holed, and the heat sink 13 includes a projecting part 13a that firs in to the through-hole (not shown in figures). The head of the projecting part 13a forms a flat surface. After inserting the projecting part 13a into the through-hole (not shown in figures), the flat surface at the head of the projecting part 13a contacts the backside of the DMD 12 (the opposite side to the image generating surface). It is possible to improve heat conductivity by mounting a elastic transformable heat transfer seat at the flat surface or the point on the backside of the DMD 12 where the heat sink 12 contacts and enhancing adhesiveness between the flat surface of the projecting part 13a and the backside of the DMD 12.

After screwing the light modulator 10 onto the lighting bracket 26 (shown in FIG. 6), the heat sink 13 is pressed and fixed to the surface opposite to the surface where the socket 11a is mounted on the DMD board 11.

How the lighting bracket 26 in the light modulator 10 is fixed is described below. First, the DMD 12 positions the light modulator 10 on the lighting bracket 26 so that the light modulator 10 faces onto the opening duct of the emitting through-hole 26d placed on the lower surface of the lighting bracket 26 in the lighting unit 20 shown in FIG. 5. Subsequently, a screw is inserted from downside in FIG. 7 so that the screw goes through the through-hole placed on the fixing part 14a (not shown in figures) and the through-hole 15 on the DMD board 11. Subsequently, the screw is screwed into a screw hole placed on the lower part of the screwing part 263 (shown in FIG. 3) mounted on the lighting bracket 26 to fix the light modulator 10 on the lighting bracket 26. As the screw is screwed on the screwing part 263 mounted on the lighting bracket 26, the fixing part 14 pushes the heat sink 13 to the side of the DMD board. Consequently, the heat sink 13 is pressed and fixed to the surface opposite to the surface where the socket 11a is mounted on the DMD board 11.

As described above, the light modulator 10 is fixed to the lighting bracket 26, and the three legs 29 shown in FIG. 5 also supports the weight of the light modulator 10.

On the image generating surface of the DMD 12, the mobile multiple micro mirrors are placed in a reticular pattern. Each micro mirror can incline the mirror surface at a predetermined angle around the twisting axis to have two states, "on" and "off". If the micro mirror is in the "on" state, as the arrow L2 in FIG. 7 indicates, the micro mirror reflects the light from the light source 61 into the first optical system 70 (shown in FIG. 2). If the micro mirror is in the "off" state, as the arrow L1 in FIG. 7 indicates, the micro mirror reflects the light from the light source 61 into the off light board 27 held at the side of the lighting bracket 26 shown in FIG. 6. Consequently, by driving each mirror individually, it is possible to control projecting the light for each pixel of the image data and to generate the image.

The light reflected to the off light board 27 (not shown in figures) is absorbed as heat, and it is cooled by outside airflow.

Next, the second optical unit 40 is described below.

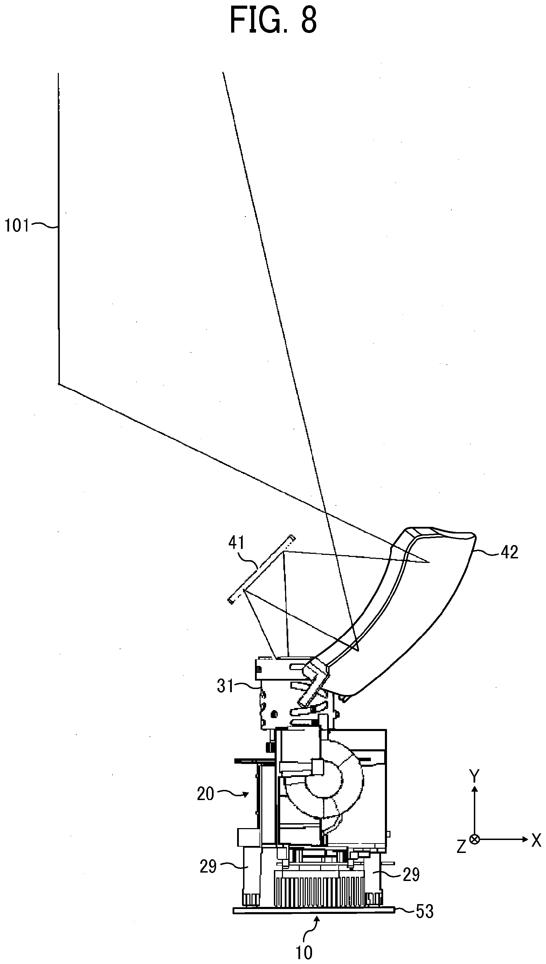

FIG. 8 is a diagram illustrating light path from the first optical system to the projection surface.

As shown in FIG. 8, the second optical unit 40 includes a reflecting mirror 41 and concave curved mirror 42 that comprises the second optical system. The reflecting surface of the curved mirror 42 can be formed as spherical surface, rotation symmetric aspheric surface, and sculptured surface.

As shown in FIG. 3, the second optical unit 40 includes the transmitting glass window 51 to transmit the image reflected by the curved mirror 42 and protect the optical devices in the image projector from dust. The second optical unit 40 includes a mirror bracket 43 that holds the reflecting mirror 41 and the transmitting glass window 51. In addition, the second optical unit 40 includes a free mirror bracket 44 that holds the curved mirror 42 and a mirror holder 45 that holds the mirror bracket 43 and the free mirror bracket 44.

The mirror bracket 43 is mounted on the upper part of the mirror holder 45. The reflecting mirror 41 is held so that the reflecting mirror 41 blocks the opening duct on the inclined surface of the mirror bracket 43, and the transmitting glass window 51 is held so that the transmitting glass window 51 blocks the upper opening duct of the mirror bracket 43. The free mirror bracket 44 that holds the curved mirror 42 is mounted on the mirror holder 45. The second optical unit 40 is fixed and mounted on the lens holder 32 in the first optical unit 30. Consequently, the projection lens unit 31 is surrounded by the reflecting mirror 41, the curved mirror 42, the mirror bracket 43, the free mirror bracket 44, the mirror holder 45, and the transmitting glass window 51.

As shown in FIG. 8, after passing through the projection lens unit 31 that comprises the first optical system 70, the light beam forms an intermediate image conjugated with the image generated by the DMD 12 between the reflecting mirror 41 and the curved mirror 42. This intermediate image is formed as curved image between the reflecting mirror 41 and the curved mirror 42. Subsequently, after forming the intermediate image, the diffusing light beam enters into the concave curved mirror 42, becomes convergent light beam, and projects the intermediate image onto the projection surface 101 enlarging the intermediate image by the curved mirror 42.

As described above, it is possible to make projection distance short and use the image projector in a small meeting room etc. by comprising the projection optical system with the first optical system 70 and the second optical system, forming the intermediate image between the first optical system 70 and the curved mirror 42 in the second optical system, and projecting the intermediate image enlarging by the curved mirror 42.

The lighting bracket 26 mounts the first optical unit 30 and the second optical unit 40. In addition, the light modulator 10 is fixed on the lighting bracket 26. Consequently, the legs 29 of the lighting bracket 26 is fixed to the base part 53 supporting weight of the first optical unit 30, the second optical unit 40, and the light modulator 10.

Since the light source 61 has limited lifetime by aging, it is necessary to replace the light source on a regular basis. Therefore, in this embodiment, the light source unit 60 is removable from the main body of the image projector 1.

FIG. 9 is a perspective diagram illustrating the image projector 1 viewed from a supported surface.

As shown in FIG. 9, there is an opening cover 54 on a base part 53 that comprises the bottom surface of the image projector 1, and there is a rotation operating part 54a on the opening cover 54. In case of rotating the rotation operating part 54a, the opening cover 54 is released from the main body of the image projector 1, and the opening cover 54 become removable from the main body of the image projector 1. There is a first intake duct 92 on the base part 53 facing the DMD 12.

As shown in FIG. 9, on y-x plane on one end of the exterior cover 59 of the image projector 1, there is a second intake duct 84 and an auxiliary input port 88 that accepts image data input from an external apparatus such as a PC.

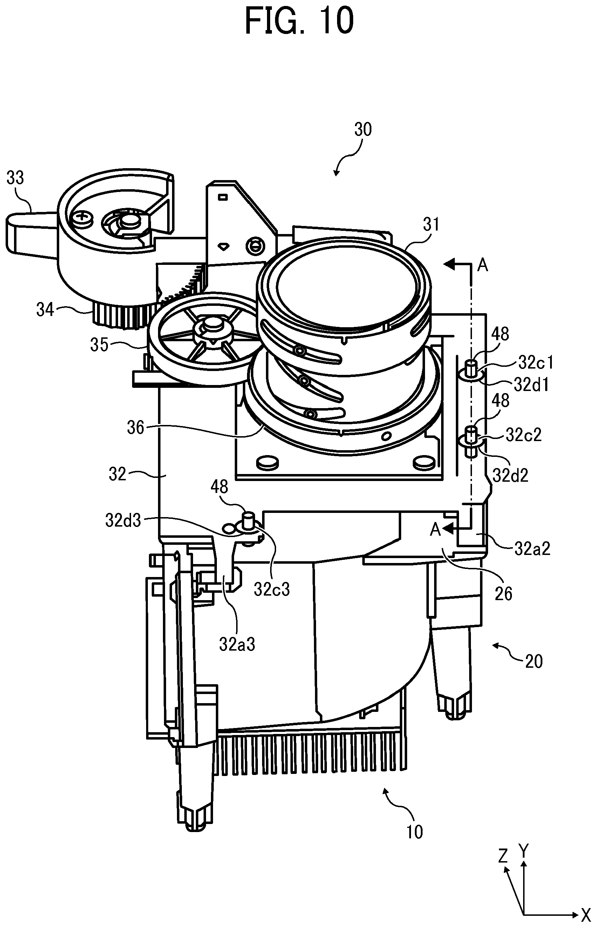

FIG. 10 is a perspective diagram illustrating the first optical unit 30 along with the lighting unit 20 and the optical modulator 10.

As shown in FIG. 10, the projection lens unit 31 includes a focusing gear 36, and the focusing gear 36 engages with an idler gear 35. The idler gear 35 engages with a lever gear 34, and a focusing lever 33 is fixed to the rotating axis of the lever gear 34. As shown in FIG. 1, the top part of the focusing lever 33 is exposed from the main body of the image projector 1.

In case of moving the focusing lever 33, the focusing gear 36 rotates via the lever gear 34 and the idler gear 35. As the focusing gear 36 rotates, multiple lenses that comprise the first optical system 70 in the projection lens unit 31 move in a predetermined direction individually to focus the projection image.

The idler gear 35 is placed in the gap between the lower part of the curved mirror 42 and the lens holder 32 as shown in FIG. 5.

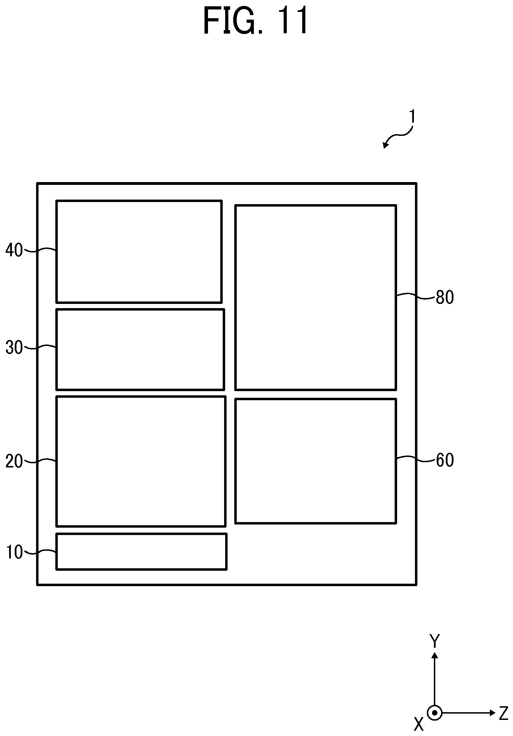

FIG. 11 is a diagram illustrating layout relationship among units in the image projector 1. As shown in FIG. 11, the light modulator 10, the lighting unit 20, the first optical unit 30, and the second optical unit 40 are placed stacked in the y direction as the minor axis direction onto the projection surface. The light source unit 60 is placed in the z direction as the major axis direction onto the projection surface against the stacked unit with the light modulator 10, the lighting unit 20, the first optical unit 30, and the second optical unit 40. As described above, in this embodiment, the light modulator 10, the lighting unit 20, the first optical unit 30, the second optical unit 40, and the light source unit are placed collocated in the y direction or the z direction parallel to the projection image and the projection surface. More specifically, The light source unit 60 is connected to the image forming unit perpendicular to the direction that stacks the image forming unit that includes the light modulator 10 and the lighting unit 20 and the projecting light system that comprise the first optical unit 30 and the second optical unit 40. In addition, the image forming unit and the light source unit 60 are placed on the same line parallel to the base part 53. Furthermore, the image forming unit and the projection light system are placed on the same line perpendicular to the base part 53, and they are placed in order of the image forming unit and the projection light system from the side of the base part 53. Consequently, it is possible to prevent the image projector from occupying mounting space perpendicular to the projection image projected onto the projection surface 101. As a result, in case of using the image projector mounting on a desk etc., it is possible to prevent the image projector from interfering the layout of desks and chairs in the small meeting room.

In addition, in this embodiment, the power supply unit 80 that supplies power to the light source 61 and the DMD 12 is stacked and mounted above the light source unit 60. These light source unit 60, the power supply 80, the image forming unit, and the projection light system are included in the case of the image projector 1 that comprises the upper surface of the image projector described above, the base part 53, and the exterior cover 59 that covers the surrounding of the image projector 1.

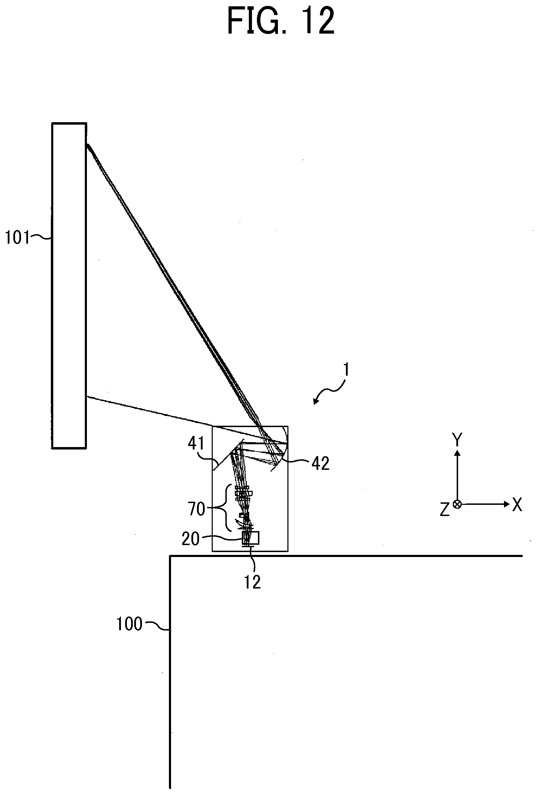

FIG. 12 is a diagram illustrating an example of use of the image projector 1 in this embodiment.

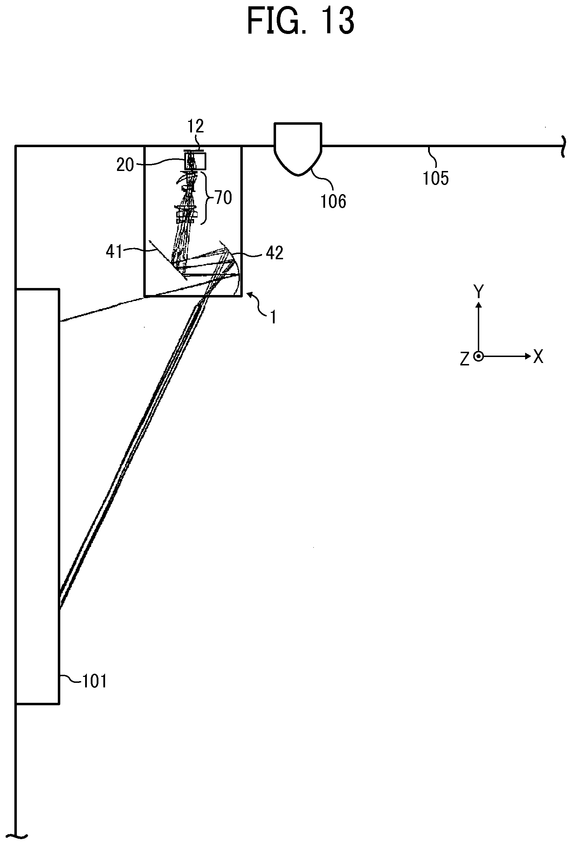

As shown in FIG. 12, if the image projector 1 is used in a meeting room for example, the image projector 1 is mounted on a table 100, and the image projector 1 projects an image onto a projection surface 101 such as a whiteboard. In addition, as shown in FIG. 13, the image projector 1 in this embodiment can also be suspended from a ceiling 105.

In this embodiment, the second optical system comprises the reflecting mirror 41 and the curved mirror 42. However, it is possible that the second optical system comprises the curved mirror 42 only. The reflecting mirror 41 can be a flat mirror, a positive refractive mirror, or negative refractive mirror. While the concave mirror is used as the curved mirror 42 in this embodiment, it is possible to use the convex mirror for that purpose instead. In this case, the first optical system 70 is configured so that the intermediate image is not formed between the first optical system 70 and the curved mirror 42.

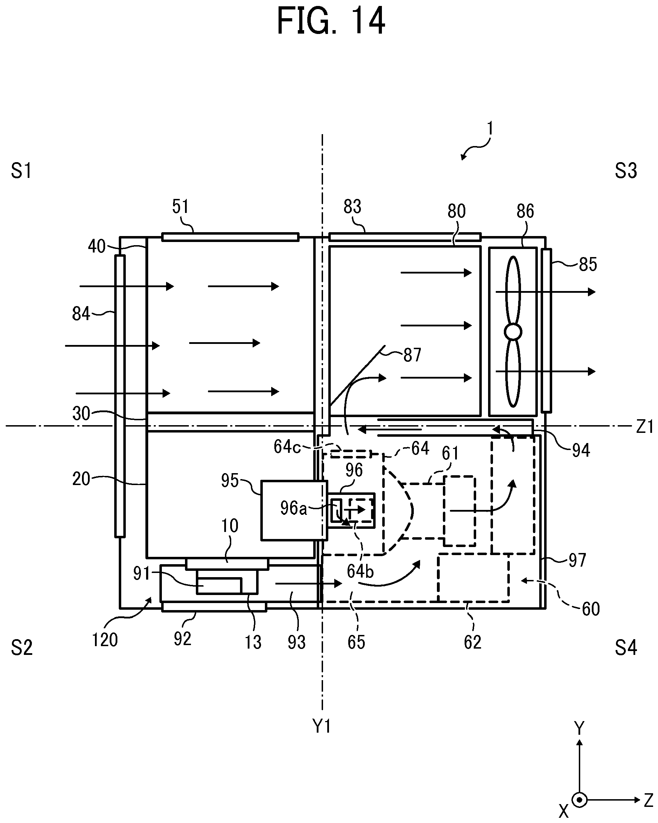

FIG. 14 is a diagram illustrating airflow in the image projector 1. FIG. 14 is a diagram illustrating the image projector 1 viewed from the direction perpendicular to the projection surface 101 (x direction).

As shown in FIG. 14, there is a second intake duct 84 to take outside air into the image projector 1 on one side of the image projector (on the left side in FIG. 14). There is no intake fan in the second intake duct 84. There is an exhaust vent 85 opened to exhaust air inside the image projector 1 on the other side of the image projector 1 (on the right side in FIG. 14). There is an exhaust fan 86 facing the exhaust vent 85.

Apart of the exhaust vent 85 and the second intake duct 84 is located between the light source unit 60 and the control panel 83 in case of viewing the image projector from the direction perpendicular to the projection surface 101 (x direction). Consequently, the outside air taken in from the second intake duct 84 flows through the gap between the lower part of the curved mirror 42 and the lens holder 32 (shown in FIG. 5) and behind the z-y plane of the mirror holder 45 in the second optical unit 40 and the curved mirror 42. Subsequently, the air moves to the exhaust vent 85 alongside of the back surface of the mirror holder 45 and the curved mirror 42. In addition, a part of the outside air taken into the apparatus from the second intake duct 84 is further vacuumed up by a light source blower 95 inside the case and flows into the light source unit 60. By locating three boards, the power supply unit 80 located in the upper part of the light source unit 60 looks open end opened in the side of the light source unit 60.

Apart of the exhaust vent 85 and the second intake duct 84 is located between the light source unit 60 and the control panel 83 in case of viewing the image projector from the direction perpendicular to the projection surface 101 (x direction). Consequently, it is possible to generate airstream that goes through between the light source unit 60 and the control panel 83 and is exhausted from the exhaust vent 85.

There is the light source blower 95 at the point where air surrounding the color motor 21a that drives the color wheel 21 in the lighting unit 20 (shown in FIG. 5) can be vacuumed. Consequently, it is possible to cool the color motor 21a by using the airstream that the light source blower 95 generates by taking air.

The air taken in by the light source blower 95 goes through the light source duct 96 and flows in to the light source intake duct 64b (shown in FIG. 4). Apart of the air that flows into the light source duct 96 goes through the opening duct 96a formed facing the exterior cover 59 of the light source duct 96 (shown in FIG. 9) and flows into between the light source housing 97 and the exterior cover 59.

The air that flows into between the light source housing 97 and the exterior cover 59 from the opening duct 96a in the light source duct 96 cools the light source housing 97 and the exterior cover 59 and is exhausted from the exhaust vent 85 by the exhaust fan 86.

After flowing to the light source intake duct 64b, the air flows into the light source 61. Subsequently, after cooling the light source 61, the air is exhausted from the light source exhaust vent 64c located on the upper surface of the holder 64. After being exhausted from the light source exhaust vent 64c, the air is exhausted into the space surrounded by the power supply unit 80 from the opening duct on the upper surface of the light source housing 97. Subsequently, after being mixed with the cold air flown into the space surrounded by the power supply unit 80 circumventing the second optical unit 40, the air is exhausted from the exhaust vent 85 by the exhaust fan 86. As described above, by mixing the hot air exhausted from the light source exhaust vent 64c with the outside air taken in from the second intake duct 84 and exhausting the mixed air, it is possible to prevent the air exhausted from the exhaust vent 85 from being high temperature.

In addition, it is preferable to locate the control panel 83 on the upper surface of the apparatus for the user friendly operation. However, in this embodiment, since the transmitting glass window 51 to project the image onto the projection surface 101 is located on the upper surface of the image projector 1, it is necessary to locate the control panel 83 at the position overlapping with the light source 61 viewing the image projector 1 from the y direction.

In this embodiment, since the hot air after cooling the light source 61 is exhausted into the exhaust vent 85 by using the airstream that goes through between the light source unit 60 and the control panel 83 flowing from the intake duct 84 to the exhaust vent 85, it is possible to prevent the hot air from moving to the control panel 83. Consequently, it is possible to prevent the control panel 83 from becoming hot by the hot air after cooling the light source 61. In addition, a part of the air that flows from the intake duct 84 to the exhaust vent 85 circumventing the second optical unit 40 cools the control panel 83 going through just below the control panel 83. This also prevents the control panel 83 from being hot.

The outside air is taken through the power supply intake duct 56 located on the base part 53 (shown in FIG. 9) by taking air by the exhaust fan 86. There is a ballast board that supplies stable power (current) to the light source 61 (not shown in figures) in the back side of the light source housing 97 in the x direction in FIG. 14. The outside air vacuumed through the power supply intake duct 56 moves upward between the light source housing 97 and the ballast board (not shown in figures) and cools the ballast board. Subsequently, after flowing into the space surrounded by the power supply unit 80 located above the ballast board, the air is exhausted through the exhaust vent 85 by using the exhaust fan 86.

In the lower left side in the main body of the apparatus in FIG. 14, there is a cooling unit 120 that cools the heat sink 13 in the light modulator 10 and the light source bracket 62 in the light source unit 60. The cooling unit 120 includes an intake blower 91 and the horizontal duct 93. There is a first intake duct 92 facing the intake blower 91 in the base part 53. As described above, the intake blower 91 is located at the first intake duct 92.

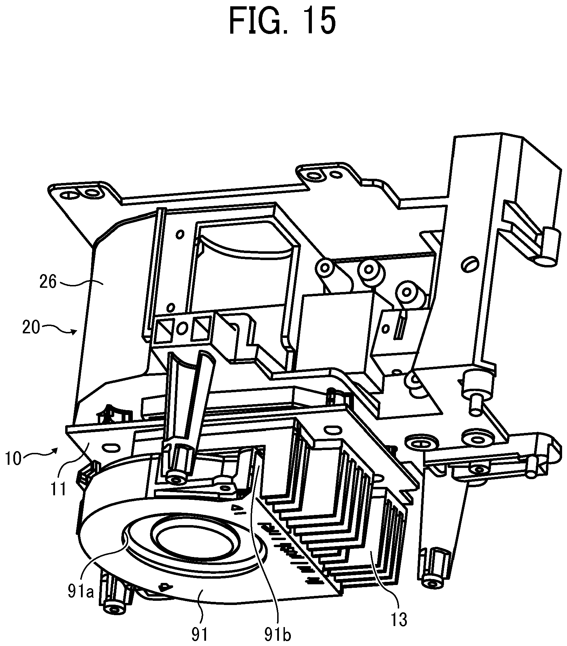

As shown in FIG. 15, the intake blower 91 is a double-sided intake sirocco fan. The intake blower 91 is mounted on the light modulator 10 so that the blower intake duct 91a on the base part side of the intake blower 91 faces the first intake duct 92 located on the base part 53 facing the DMD 12 on the case of the image projector. The opposite side of the blower intake duct 91a on the base part side of the intake blower 91 is also the intake duct. However, air-intake of the blower intake duct 91a on the base part side is larger. The heat sink 13 comprises a first fin part whose height of the fin is predetermined and a second fin part whose height of the fin is taller than the first fin part. The intake blower 91 is mounted on the first fin part so that the blower exhaust vent 91b of the intake blower 91 faces the second fin part of the heat sink 13. By adopting the double-sided intake sirocco fan for the intake blower 91, it is possible to cool the first fin part of the heat sink 13 effectively.

As shown in FIG. 14, the horizontal duct 93 is opened a part of its upper surface and the lower surface. The horizontal duct 93 is mounted on the base part 53 in the image projector 1 so that the opening duct of the lower surface of the horizontal duct 93 faces the first intake duct 92 placed on the base part 53. In addition, the light modulator 10 is mounted on the horizontal duct 93 so that the heat sink 13 in the light modulator 10 and the intake blower 91 mounted on the light modulator 10 go through the opening duct on the lower surface of the horizontal duct 93.

The intake blower 91 takes the outside air in through the blower intake duct 91a on the base part side via the first intake duct 92. The intake blower 91 exhausts the outside air that the intake blower 91 takes in to the second fin part of the heat sink through the blower exhaust vent 91b. Consequently, the second fin part of the heat sink 13 is air-cooled. By air-cooling the second fin part of the heat sink 13, it is possible to cool the DMD 12 effectively and prevent the DMD 12 from being hot.

As shown in FIG. 14, the airstream is generated by the intake blower 91, after going through the heat sink 13, the air moves through the horizontal duct 93 and flows into the through part 65 or the opening duct 65a located on the light source bracket 62 in the light source 60 shown in FIG. 4. After flowing into the opening duct 65a, the air flows into between the movable cover 54 and the light source bracket 62 and cools the movable cover 54.

By contrast, after flowing into the through part 65, the air cools the light source bracket 62. Subsequently, the air flows into the part facing the emitting side of the light source 61 and cools the reflector of the light source 61 by cooling the opposite side of the reflecting surface of the reflector in the light source 61. Consequently, the air that goes through the through part 65 draws heat from both the light source bracket 62 and the light source 61. After going through near the reflector, the air goes through the exhaust duct 94 that directs the air from the height of the light source bracket 62 to the height of the lower part around the exhaust fan 86, is mixed with the air exhausted from the light source exhaust vent 64c, goes through the fluid guide 87, and is exhausted through the exhaust vent 85 by the exhaust fan 86. After cooling the movable cover 54, the air flows into between the movable cover 54 and the light source bracket 62 through the opening duct 65a moves through inside the apparatus and is exhausted through the exhaust vent 85 by the exhaust fan 86. Therefore, the airflow path from the first intake duct 92 to the exhaust vent 85 does not include around the gap between the lower part of the curved mirror 42 and the lens holder 32.

As described above, in this embodiment, there is the gap between the lower part of the curved mirror 42 and the lens holder 32 to ensure space for laying out the idler gear 35 that engages with the focus gear 36 in the projection lens unit 31. The air flows into and get out of the second optical unit 40 due to that gap. Therefore, a part of outside air taken through the second intake duct 84 that moves to the exhaust vent 85 alongside of the mirror holder 45 and the backside of the curved mirror 42 flows into the gap between the lower part of the curved mirror 42 and the lens holder 32 described above. As a result, the air flows into the second optical unit 40, and it is possible that dust included in the outside air is adhered to the curved mirror 42 and the reflecting mirror 41 etc.

To cope with that issue, in this embodiment, the first intake duct 92 is located on the base part 53 as the opposite surface part that opposes to the heat sink 13 on the case of the image projector 1. Consequently, the outside air taken through the first intake duct 92 for cooling flows to the heat sink 13 directly. Therefore, it is possible to reduce pressure loss until the outside air for cooling arrives at the heat sink 13 compared to the image projector described in JP-2013-097340-A that the outside air for cooling flows to the heat sink 13 through the vertical duct 192 as shown in FIG. 21. As a result, it is possible to increase the airflow volume that flows to the exhaust vent 85 via the heat sink 13 and the light source unit 60 compared to the image projector described in JP-2013-097340-A assuming the same intake performance for the intake blower 91 and the intake blower 191. The airflow volume exhausted through the exhaust vent 85 by the exhaust fan 86 is the same between the case in this embodiment and the case shown in FIG. 21 described above (described in JP-2013-097340-A). Therefore, by increasing the airflow volume that flows into the exhaust vent 85 via the heat sink 13 and the light source unit 60, it is possible to reduce the outside airflow volume taken through the second intake duct 84 by the exhaust fan 86 (since there is no intake fan at the second intake duct 84) that moves to the exhaust vent 85 alongside around the gap between the lower part of the curved mirror 42 and the lens holder 32, the mirror holder 45, and the backside of the curved mirror 42 compared to the case described in JP-2013-097340-A. As a result, it is possible to prevent the dust from being adhered to the curved mirror 42 and the reflecting mirror 41. As described above, since it is possible to prevent the dust from being adhered to the curved mirror 42 and the reflecting mirror 41, it is possible to keep projecting good images for a long time and to provide the reliable image projector.

In the image projector described in JP-2013-097340-A, it should be noted that it is possible to increase the airflow volume that flows into the exhaust vent 85 after cooling the DMD 12 and the light source by increasing the revolutions of the fan in the intake blower. However, in this case, that results in increasing the wind noise of the fan in the intake blower 91 and making noise. In addition, that results in disadvantage that increases the power consumption. By contrast, in this embodiment, it is possible to increase the airflow volume that flows into the exhaust vent 85 after cooling the DMD 12 and the light source without increasing the revolutions of the fan in the intake blower. Consequently, it is possible to prevent the noise and the power consumption from increasing.

In addition, it is possible to lay out the first intake duct 92 on the exterior case 59 facing the DMD 12. In this configuration, it is also possible to circulate the outside air taken through the first intake duct 92 to the heat sink 13 directly.

As shown in FIG. 14, in case of dividing the projector into four areas, from S1 to S4, dividing the projector into halves in the z direction and the y direction in FIG. 14, the exhaust vent 85 is located in area S3, and the light source unit 60 is located in area S4. Consequently, after being taken through the first intake duct 92, as shown in FIG. 14, the outside air flows through areas in order of S2, S3, and S4 and is exhausted to the outside of the image projector, and it is possible to prevent the outside air from going through area S1 where the second optical unit 40 is located. As a result, the outside air taken through the first intake duct 92 can cool the DMD 12 and the light source unit 60 without going through the area where the second optical unit 40 is located.

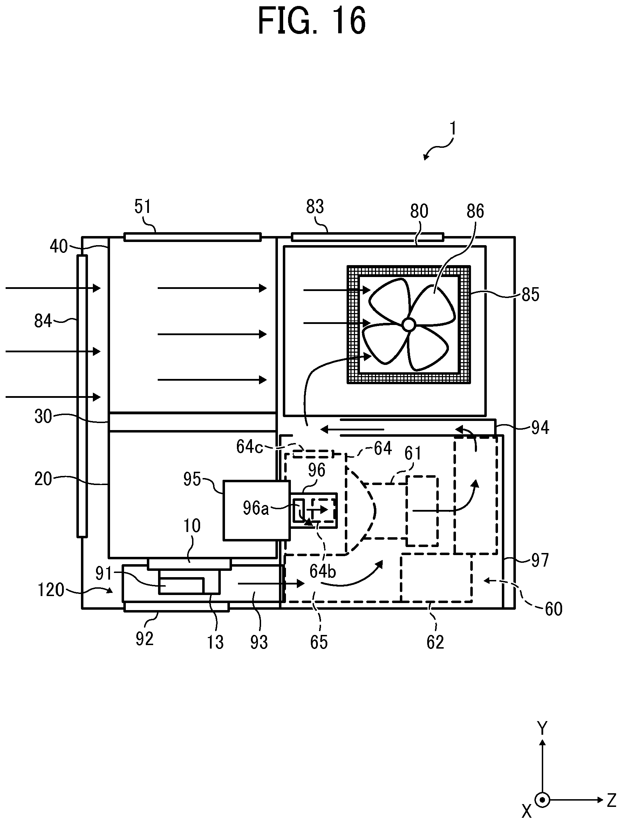

The exhaust vent 85 can be located at area S3 shown in FIG. 14. For example, it is possible to locate the exhaust vent 85 on the exterior cover 59 facing the projection surface 101 (facing the side where the focus lever 33 is located) as shown in FIG. 16 and locate the exhaust fan 86 facing the exhaust vent 85.

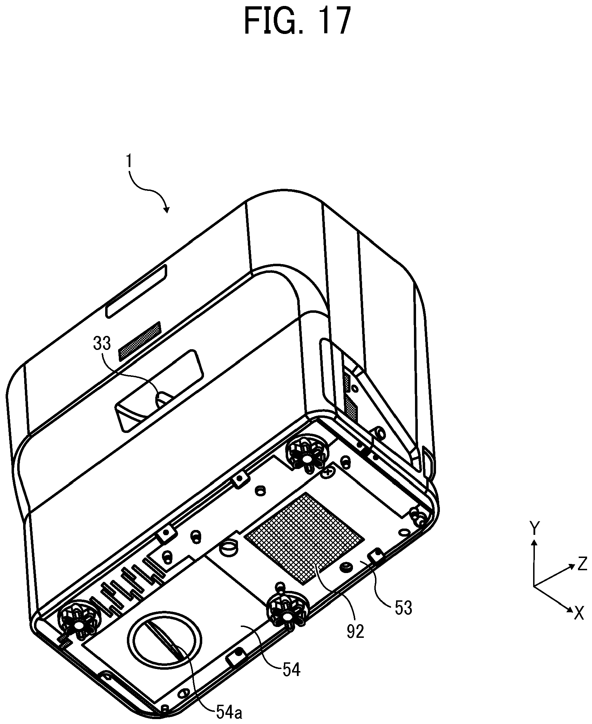

It is also possible to eliminate the second intake duct 84 and cover the area on the exterior cover 59 facing the projection optical system (the second optical unit 40 and the first optical unit 30) as shown in FIG. 17

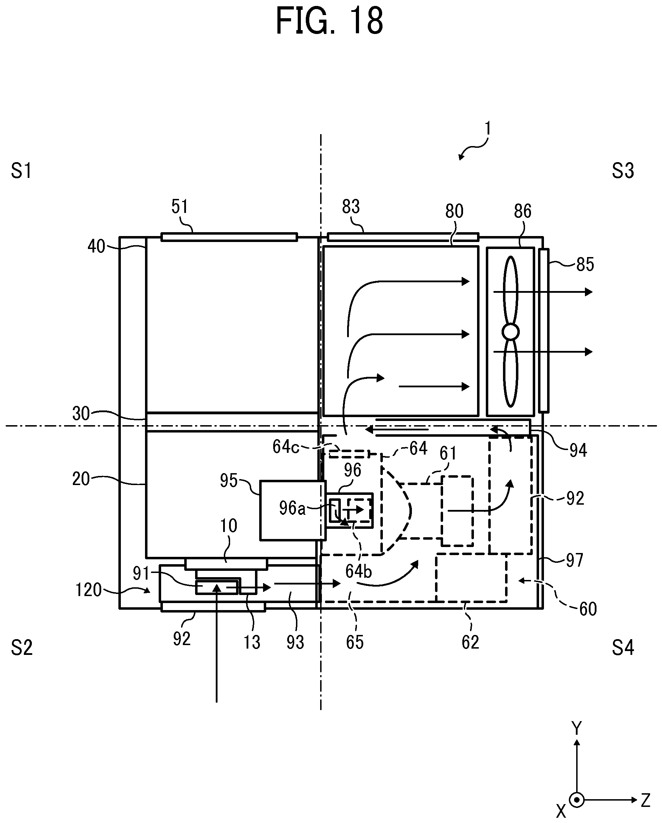

FIG. 18 is a perspective diagram illustrating airflow in the image projector 1 without the second intake duct 84.

As shown in FIG. 18, by eliminating the second intake duct 84, the air flows in order of the area S2 where the image forming units (the lighting unit 20 and the light modulator 10) are located, the area S4 where the light source unit 60 is located, and the area S3 where the power supply unit 80 is located. By contrast, there is almost no airflow in the area S1 where the projection optical system (the first optical unit 30 and the second optical unit 40) is located (upper left in FIG. 18). Consequently, it is further possible to prevent the outside air taken into the apparatus from entering into the second optical unit and prevent the dust included in the outside air from being adhered to the curved mirror 42 and the reflecting mirror 41. As described above, since it is possible to prevent the dust from being adhered to the curved mirror 42 and the reflecting mirror 41, it is possible to keep projecting good images for a long time and to provide the reliable image projector.

In the present invention, described above is an example, and advantageous effects specific to each of following embodiments are performed.

### First embodiment

In the image projector that includes the projection optical unit to project images such as the projection optical system and the case to contain the projection optical unit (in this embodiment, the case comprises the exterior cover 59 and the base part 53 etc.), the projection optical unit includes the gap (between the first optical unit 30 and the lower part of the curved mirror 42 in this embodiment), and the air can flow in through the gap. The case includes the exhaust vent 85 that is located on the predetermined surface and includes the first fan such as the exhaust fan 86, the first intake duct 92 that includes the second fan such as the intake blower 91 and whose airflow path toward the exhaust vent 85 does not include around the gap, and the second intake duct 84 that is located on the surface different from the first intake duct 92, does not include a fan, and whose airflow path toward the exhaust vent 85 includes around the gap.

In the first embodiment, by locating the first intake duct 92 on the base part 53 facing the light modulator 10 as the surface different from the surface where the second intake duct 84 is located, it is possible to circulate the outside air taken through the first intake duct 92 to the light modulator 10 (the heat sink 13 in the light modulator 10 in this embodiment) directly. Consequently, it is possible to reduce the pressure loss until the outside air arrives at the light modulator 10 compared to the image projector described in JP-2013-097340-A that circulates the outside air taken through the first intake duct 92 to the light modulator 10 via the vertical duct 192. As a result, it is possible to increase the airflow volume that goes through the light modulator 10 and the light source whose airflow path toward the exhaust vent 85 does not include the gap described above compared to the image projector described in JP-2013-097340-A. By increasing the airflow volume after cooling the light source, it is possible to reduce the airflow volume taken through the second intake duct 84 that does not include the fan by the exhaust fan 86 compared to the image projector described in JP-2013-097340-A. As a result, the airflow volume that flows into the exhaust vent 85 via around the gap described above is reduced, and it is possible to prevent the outside air from flowing into the projection optical unit. Consequently, it is possible to prevent dust included in the outside air from being adhered to the optical parts such as the mirrors and the lenses included in the projection optical unit.

### Second embodiment

In the first embodiment, in case of viewing the image projector that includes the image generating device such as the DMD 12 perpendicular to both the light emitting direction of the light source 61 and the light emitting direction of the image generating device so that the image projecting direction of the image generating device such as the DMD 12 become parallel to the vertical direction or the horizontal direction, the image projector is divided into halves in the vertical direction and the horizontal direction respectively to have four areas. In that case, the exhaust vent 85 is located at the area S3 in FIG. 14 diagonal to the area S2 in FIG. 14 where the first intake duct is located, and the light source 61 is located at the area S4 in FIG. 14 diagonal to the area S1 in FIG. 14 where the projection optical unit such as the projection optical system is located.

In the configuration described above, as described before, it is possible to exhaust the outside air taken through the intake duct such as the first intake duct 92 through the exhaust vent 85 after cooling the image generating device such as the DMD 12 and the light source 61 without circulating the outside air into the area S1 in FIG. 14 where the projection optical unit such as the projection optical system is located. Consequently, it is possible to prevent the dust included in the outside air from being adhered to the optical devices such as the curved mirror 42 and the reflecting mirror 41 included in the projection optical unit.

### Example not part of the invention

In the first embodiment or the second embodiment, the area on the case facing the projection optical unit such as the projection optical system is closed.

By adopting the configuration described above, as shown in FIG. 18 described above, it is possible to prevent the outside air taken in the apparatus from hardly flowing into the area S1 where the projection optical unit such as the projection optical system B. Consequently, it is possible to prevent the dust included in the outside air from being adhered to the optical devices such as the curved mirror 42 and the reflecting mirror 41 as time passes.

Numerous additional modifications and variations are possible in light of the above teachings. It is therefore to be understood that, within the scope of the appended claims, the disclosure of this patent specification may be practiced otherwise than as specifically described herein.

## Claims

1. An image projector (1), comprising:
a case (59, 53); and
a projection optical unit (30, 40) to project an image on a projection surface, the projection optical unit contained in the case and comprising a first optical unit (30), including a projection lens unit (31) and a lens holder (32), and a second optical unit (40), including a reflecting mirror (41) and a curved mirror (42), wherein the first and second optical units (30, 40) are arranged adjacent to each other in a direction parallel to a minor axis of the projected image so as to form a gap between the lens holder and the curved mirror;
wherein:
the projection optical system can project the image while the curved mirror is in the case; the case (59, 53) includes:
an exhaust vent (85) that is located on a predetermined surface of the case (59, 53) at a position facing a first fan (86);
a first intake duct (92) provided on a surface of the case (59, 53) so as to face a second fan (91) ; and
a second intake duct (84) provided on a surface different than the surface where the first intake duct (92) is provided,
air that flows from the first intake duct (92) toward the exhaust vent (85) is prevented from flowing in the gap,
there is no intake fan facing the second intake duct,
air that flows from the second intake duct (84) toward the exhaust vent (85) flows in the gap; and
air flows into the second optical unit through the gap.

2. The image projector (1) according to claim 1, further comprising: an image generating device (12) to generate the image, wherein, when the image projector (1) is divided into halves, respectively, in a vertical direction and a horizontal direction to have four areas if the image projector (1) is viewed perpendicular to both a light emitting direction of a light source (61) and an image projecting direction of the image generating device (12) so that the image projecting direction of the image generating device (12) is parallel to the vertical direction or the horizontal direction, the exhaust vent (85) is located at an area diagonal to an area where the first intake duct (92) is located, and the light source (61) is located at an area diagonal to an area where the projection optical unit is located.

3. The image projector (1) according to any one of claims 1 to 2, wherein the surfaces of the case (59, 53) where the first and second intake ducts (84, 92) are provided are facing the projection optical unit (30, 40).

## Patentansprüche

1. Bildprojektor (1), umfassend:
ein Gehäuse (59, 53); und
eine Projektionsoptikeinheit (30, 40), um ein Bild auf eine Projektionsfläche zu projizieren, wobei die Projektionsoptikeinheit im Gehäuse enthalten ist und eine erste optische Einheit (30), umfassend eine Projektionslinseneinheit (31) und einen Linsenhalter (32), und eine zweite optische Einheit (40), umfassend einen reflektierenden Spiegel (41) und einen gekrümmten Spiegel (42), umfasst, wobei die erste und zweite optische Einheit (30, 40) in eine Richtung parallel zu einer Nebenachse des projizierten Bildes nebeneinander angeordnet sind, um eine Lücke zwischen dem Linsenhalter und dem gekrümmten Spiegel zu bilden;
wobei:
das Projektionsoptiksystem das Bild projizieren kann, während der gekrümmte Spiegel im Gehäuse ist;
das Gehäuse (59, 53) Folgendes umfasst:
eine Entlüftungsöffnung (85), die sich auf einer vorbestimmten Fläche des Gehäuses (59, 53) an einer Position gegenüber einem ersten Gebläse (86) befindet;
einen ersten Ansaugkanal (92), der auf einer Fläche des Gehäuses (59, 53) bereitgestellt ist, sodass er einem zweiten Gebläse (91) gegenüberliegt; und
einen zweiten Ansaugkanal (84), der auf einer anderen Fläche als der Fläche, auf der der erste Ansaugkanal (92) bereitgestellt ist, bereitgestellt ist,
Luft, die vom ersten Ansaugkanal (92) zur Entlüftungsöffnung (85) hinströmt, am Strömen in die Lücke gehindert wird,
es kein Ansauggebläse gegenüber dem zweiten Ansaugkanal gibt,
Luft, die vom zweiten Ansaugkanal (84) zur Entlüftungsöffnung (85) hinströmt, in die Lücke strömt; und
Luft durch die Lücke in die zweite optische Einheit strömt.

2. Bildprojektor (1) nach Anspruch 1, ferner umfassend: eine Bilderzeugungsvorrichtung (12) zum Erzeugen des Bildes, wobei, wenn der Bildprojektor (1) in Hälften geteilt ist, jeweils in eine vertikale Richtung und eine horizontale Richtung, um vier Bereiche zu haben, wenn der Bildprojektor (1) senkrecht zu sowohl einer lichtemittierenden Richtung einer Lichtquelle (61) als auch einer Bildprojektionsrichtung der Bilderzeugungsvorrichtung (12) betrachtet wird, sodass die Bildprojektionsrichtung der Bilderzeugungsvorrichtung (12) parallel zu der vertikalen Richtung oder der horizontalen Richtung ist, die Entlüftungsöffnung (85) sich in einem Bereich diagonal zu einem Bereich, in dem sich der erste Ansaugkanal (92) befindet, befindet und die Lichtquelle (61) sich in einem Bereich diagonal zu einem Bereich, in dem sich die Projektionsoptikeinheit befindet, befindet.

3. Bildprojektor (1) nach einem der Ansprüche 1 bis 2, wobei die Flächen des Gehäuses (59, 53), an denen der erste und zweite Ansaugkanal (84, 92) bereitgestellt sind, der Projektionsoptikeinheit (30, 40) gegenüberliegen.

## Revendications

1. Projecteur d'image (1), comprenant :
un boîtier (59, 53) ; et
une unité optique de projection (30, 40) pour projeter une image sur une surface de projection, l'unité optique de projection contenue dans le boîtier et comprenant une première unité optique (30), comprenant une unité de lentille de projection (31) et un porte-lentille (32), et une deuxième unité optique (40), comprenant un miroir réfléchissant (41) et un miroir incurvé (42), les première et deuxième unités optiques (30, 40) étant agencées de manière adjacentes l'une à l'autre dans une direction parallèle à un axe mineur de l'image projetée de manière à former un espace entre le porte-lentille et le miroir incurvé ;
dans lequel :
le système optique de projection peut projeter l'image tandis que le miroir incurvé se situe dans le boîtier ;
le boîtier (59 ; 53) comprend :
un orifice d'évacuation (85) qui est situé sur une surface prédéterminée du boîtier (59, 53) à une position face à un premier ventilateur (86) ;
un premier conduit d'admission (92) disposé sur une surface du boîtier (59, 53) de manière à faire face à un deuxième ventilateur (91) ; et
un deuxième conduit d'admission (84) disposé sur une surface différente de la surface où le premier conduit d'admission (92) est disposé,
l'air circulant du premier conduit d'admission (92) à l'orifice d'évacuation (85) ne peut pas circuler dans l'espace ;
il n'y a pas de ventilateur d'admission face au deuxième conduit d'admission,
l'air circulant du deuxième conduit d'admission (84) à l'orifice d'évacuation (85) circule dans l'espace ; et
l'air circule dans la deuxième unité optique à travers l'espace.

2. Projecteur d'image (1) selon la revendication 1, comprenant en outre : un dispositif de génération d'image (12) pour générer l'image, dans lequel, lorsque le projecteur d'image (1) est divisé en moitiés, respectivement, dans une direction verticale et une direction horizontale pour avoir quatre zones si le projecteur d'image (1) est vu perpendiculairement à la fois à une direction d'émission de lumière d'une source lumineuse (61) et une direction de projection d'image du dispositif de génération d'image (12) de manière que la direction de projection d'image du dispositif de génération d'image (12) est parallèle à la direction verticale ou la direction horizontale, l'orifice d'évacuation (85) est situé dans une zone en diagonale par rapport à une zone où le premier conduit d'admission (92) est situé, et la source lumineuse (61) est située dans une zone en diagonale par rapport à une zone où l'unité optique de projection est située.

3. Projecteur d'image (1) selon l'une quelconque des revendications 1 à 2, dans lequel les surfaces du boîtier (59, 53) où les premier et deuxième conduits d'admission (84, 92) sont disposés font face à l'unité optique de projection (30, 40).
